# EUROPÄISCHE PATENTSCHRIFT

(11) **EP 0 929 964 B1**
(45) Veröffentlichungstag und Bekanntmachung des Hinweises auf die Patenterteilung: **10.03.2004**
(21) Anmeldenummer: 97909152.7
(22) Anmeldetag: 18.09.1997
(51) Int. Cl.: H04M 3/46, H04Q 3/62

(54) **KOMMUNIKATIONSSYSTEM AUS MINDESTENS ZWEI NEBENSTELLENANLAGEN MIT TEAMFUNKTION**
COMMUNICATIONS SYSTEM CONSISTING OF AT LEAST TWO PRIVATE BRANCH EXCHANGES (PBX) WITH TEAM FUNCTION
SYSTEME DE COMMUNICATION CONSTITUE D'AU MOINS DEUX INSTALLATIONS D'ABONNES AVEC POSTES SUPPLEMENTAIRES A FONCTION D'EQUIPE

(30) Priorität: 30.09.1996 DE 19640266
(43) Veröffentlichungstag der Anmeldung: 21.07.1999
(73) Patentinhaber: SIEMENS AKTIENGESELLSCHAFT, 80333 München (DE)
(72) Erfinder: WILLE, Klaus, D-81679 München (DE)
(86) Internationale Anmeldenummer: PCT/DE1997/002113
(87) Internationale Veröffentlichungsnummer: WO 1998/015104

(56) Entgegenhaltungen:
- US-A- 5 521 970
- DEHLEN H: "VERNETZTE TK-ANLAGEN OHNE GRENZEN" NTZ NACHRICHTENTECHNISCHE ZEITSCHRIFT, Bd. 45, Nr. 9, 1.September 1992, Seiten 714-716, 718 - 721, XP000310768
- BOOM W ET AL: "NEW GROUP FEATURE COLLECTION FOR SOPHO-S ISPBXS" PHILIPS TELECOMMUNICATION REVIEW, Bd. 51, Nr. 3, 1.Dezember 1993, Seiten 10-16, XP000457193
- HOCHREUTER D ET AL: "HICOM 300 1 EINE VIELFALT NEUER MOGLICHKEITEN" TELCOM REPORT, Bd. 18, Nr. 5, 1.September 1995, Seiten 265-267, XP000543153
- MARKKU KORPI: "GLOBAL VERNETZT MIT CORNET D-KANAL-PROTOKOLL BASIERT AUF NATIONALEN UND INTERNATIONALEN NORMEN" TELCOM REPORT, Bd. 15, Nr. 6, 1.November 1992, Seiten 284-287, XP000343333
- FLIEDNER B: "PRIVATE NETZE AUF DEM WEG IN DIE ZUKUNFT DURCHGANGIGE SERVICELEISTUNGEN SICHERN MARKTCHANCEN FUR UNTERNEHMEN" TELCOM REPORT, Bd. 18, Nr. 2, 1.März 1995, Seiten 75-77, XP000510937
- FURSAT J C ET AL: "DYNAMIC VIRTUAL COMMUNICATION NETWORKS: THE TELCOM EUROPE RANGE" COMMUTATION ET TRANSMISSION, Bd. 14, Nr. 1, 1.Januar 1992, Seiten 39-48, XP000257951
- EBERL L H ET AL: "INTEGRATED ISDN D-SERVER FOR INTELLIGENT NETWORKING" COMMUNICATIONS TECHNOLOGY FOR THE 1990'S AND BEYOND, DALLAS, NOV. 27 - 30, 1989, Bd. 1 OF 3, 27.November 1989, INSTITUTE OF ELECTRICAL AND ELECTRONICS ENGINEERS, Seiten 539-542, XP000091154

## Beschreibung

Die Erfindung betrifft ein Kommunikationssystem, das aus mindestens zwei Nebenstellenanlagen, jeweils mit einer Vermittlungssteuerung und mindestens einem Vermittlungsknoten, der über eine Netzanschlußeinrichtung an mindestens ein übergeordnetes Kommunikationsnetz angeschlossen ist und über mindestens eine Teilnehmeranschlußeinrichtung an Endgeräte angeschlossen ist, wobei in einer der Nebenstellenanlagen eine Teamfunktionssteuerung vorgesehen ist, die bestimmte Endgeräte als über den Vermittlungsknoten dieser Nebenstellenanlage anrufbare Teamendgeräte eines Teams gemäß einer Teamfunktion steuert und hierbei abhängig vom vermittlungstechnischen Zustand einzelner Teamendgeräte eine Signalisierung zu anderen Teamendgeräten veranlaßt sowie deren vermittlungstechnischen Zustand beeinflußt.

Ein solches Kommunikationssystem ist z.B. aus dem Artikel von H. Dehlen: "Vernetzte TK-Anlagen ohne Grenzen"; NTZ Nachrichtentechnische Zeitschrift, Bd. 45, Nr. 9, 1.september 1992, Seiten 714-721, XP000310768, bekannt.

Solche zusammengeschalteten Nebenstellenanlagen, von denen in mindestens einer eine Teamfunktion realisiert ist, sind u.a. in Form der von der Siemens AG kommerziell vertriebenen Nebenstellenänlage HICOM 300 bekannt. Eine bekannte Teamfunktion ist beispielsweise die Funktion "Anrufübernahme", bei der kommende Rufe innerhalb einer Anrufübernahmegruppe aus mehreren Endgeräten angezeigt werden und an jedem Endgerät, das zur Anrufübernahmegruppe gehört, entgegengenommen werden kann. Eine andere bekannte Teamfunktion ist die Funktion "Sammelanschluß", der unter einer speziellen Sammelnummer erreichbar ist. Hierbei kann jeder Teilnehmer eines Sammelanschlusses auch unmittelbar über eine individuelle Rufnummer angerufen werden. Über die spezielle Sammelnummer werden jedoch alle Teilnehmer erreicht. Die Sammelnummer ist beispielsweise einem Master-Endgerät zugeordnet.

Eine weitere bekannte Teamfunktion ist die integrierte Vorzimmeranlage, die auch Chef-Sekretär-Anlage genannt wird.

Bei bekannten Kommunikationssystemen sind alle Teilnehmer eines Teams an eine einzige Nebenstellenanlage angeschlossen und werden über dieselbe Netzanschlußeinrichtung an ein übergeordnetes Kommunikationsnetz vermittelt.

Aufgabe der Erfindung ist es, ein Kommunikationssystem bereitzustellen, bei dem eine Teamfunktion auch mit abgesetzten Teamteilnehmern realisierbar ist.

Diese Aufgabe löst die Erfindung durch ein Kommunikationssystem mit den Merkmalen des Anspruches 1.

Erfindungsgemäß ist vorgesehen, daß mindestens ein erstes Teamendgerät des Teams unmittelbar über eine Teilnehmeranschlußeinrichtung an einen Vermittlungsknoten der ersten Nebenstellenanlage angeschlossen ist und mindestens ein zweites Teamendgerät als abgesetzter Teilnehmer des Teams über eine Teilnehmeranschlußeinheit an einen Vermittlungsknoten der zweiten Nebenstellenanlage als Endgerät angeschlossen ist, wobei dieser abgesetzte Teilnehmer über den Vermittlungsknoten der ersten Nebenstellenanlage, eine Hotline-Verbindung zwischen der ersten und der zweiten Nebenstellenanlage und einen Vermittlungsknoten der zweiten Nebenstellenanlage erreichbar ist.

Eine in der ersten Nebenstellenanlage vorgesehene Teamfunktionssteuerung bewirkt für kommende Rufe eine automatische Anrufumleitung zu Team-Ersatzteilnehmerendgeräten, wenn sie erkennt, daß die Hotline-Verbindung zur zweiten Nebenstellenanlage und somit zu den abgesetzten Teamendgeräten gestört ist.

Der Anschluß von Teamendgeräten als abgesetzte Teilnehmer über eine Hotline-Verbindung ermöglicht es, Teilnehmer eines Teams innerhalb eines Firmennetzes in beliebigem räumlichem Abstand zueinander anzuordnen.

Eine automatische Anrufumleitung zu Team-Ersatzteilnehmerendgeräten bei gestörter Hotline-Verbindung zur zweiten Nebenstellenanlage stellt sicher insbesondere in dem Fall, daß ein beträchtlicher Anteil der Teamendgeräte abgesetzte, über die Hotline zu erreichende Endgeräte sind, daß die verbleibenden Teamteilnehmer bei Ausfall der Hotline und somit Reduzierung des Teams um die Teamteilnehmer der abgesetzten Endgeräte nicht Überlastet werden bzw. die erforderliche Dienstleistung immer noch ohne zu große Verzögerung geleistet werden kann.

Eine besonders günstige Ausgestaltungsform eines erfindungsgemäßen Kommunikationssystems sieht vor, daß die Teamfunktionssteuerung die Verfügbarkeit der Hotline-Verbindung zwischen den beiden Nebenstellenanlagen durch Prüfung der für die transparente Übertragung der Teilnehmer-zu-Teilnehmer-Meldungen für die abgesetzten Teilnehmer erforderlichen Signalisierungsverbindung erfaßt. In diesem Fall benötigt die Verfügbarkeitsprüfung keine B-Kanal-Ressourcen. Außerdem ist keine zusätzliche Signalisierung erforderlich.

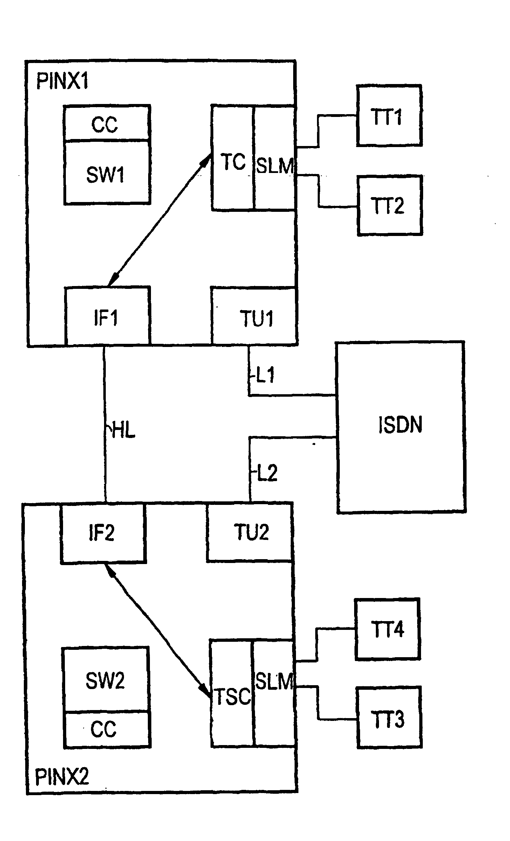

Nachstehend wird die Erfindung anhand eines Ausführungsbeispiels unter Bezugnahme auf die Figur näher erläutert.

Die Figur zeigt in schematischer Blockdarstellung ein erfindungsgemäßes Kommunikationssystem.

Die schematische Blockdarstellung der Figur zeigt ein Kommunikationssystem, bestehend aus einer ersten Nebenstellenanlage PINX1 mit einer Vermittlungssteuerung CC, einem ersten Vermittlungsknoten SW1, einer Teamfunktionssteuerung TC und einer ersten Netzanschlußeinrichtung TU1, die über eine Verbindung L1 mit einem übergeordneten Kommunikationsnetz ISDN verbunden ist. Ein Teamendgerät TT1 und ein Team-Ersatzendgerät TT2 sind jeweils über eine Teilnehmeranschlußeinrichtung SLM an den ersten Vermittlungsknoten SW1 angeschlossen und werden von der Teamfunktionssteuerung TC gesteuert. Die Teamfunktionssteuerung TC steuert außerdem eine Verbindung zu einer ersten Hotline-Schnittstelle IF1.

Die zweite Nebenstellenanlage PINX2 enthält eine Vermittlungssteuerung CC und einen zweiten Vermittlungsknoten SW2, an den u.a. über eine Teilnehmeranschlußeinrichtung SLM zwei Teamendgeräte TT3 und TT4 angeschlossen sind. Die zweite Nebenstellenanlage PINX2 ist über eine zweite Netzanschlußeinrichtung TU2 und eine Verbindung L2 an das übergeordnete Kommunikationsnetz ISDN angeschlossen.

Eine Teamfunktionssubsteuerung TSC steuert die Teamendgeräte TT3 und TT4 und außerdem eine Verbindung zu einer zweiten Hotline-Schnittstelle IF2. Die erste Hotline-Schnittstelle IF1 der ersten Nebenstellenanlage PINX1 ist über eine Hotline-Verbindung HL mit der zweiten Hotline-Schnittstelle IF2 der zweiten Nebenstellenanlage PINX2 verbunden.

Die in der ersten Nebenstellenanlage PINX1 vorgesehene Teamfunktionssteuerung TC bewirkt für kommende Rufe eine automatische Anrufumleitung zu Team-Ersatzteilnehmerendgeräten TT2, wenn sie erkennt, daß die Hotline-Verbindung HL zur zweiten Nebenstellenanlage PINX2 und somit zu den abgesetzten Teamendgeräten TT3, TT4 gestört ist.

## Patentansprüche

1. Kommunikationssystem, bestehend aus mindestens einer ersten Nebenstellenanlage (PINX1) mit einer Vermittlungssteuerung (CC) und mindestens einem ersten Vermittlungsknoten (SW1), der über eine erste Netzanschlußeinrichtung (TU1) an mindestens ein übergeordnetes Kommunikationsnetz (ISDN) angeschlossen ist und über mindestens eine Teilnehmeranschlußeinrichtung (SLM) an Endgeräte (TT1, TT2) angeschlossen ist, und bestehend aus mindestens einer zweiten Nebenstellenanlage mit einer Vermittlungssteuerung (CC) und mindestens einem zweiten Vermittlungsknoten (SW2), der über eine zweite Netzanschlußeinrichtung (TU2) an das übergeordnete Kommunikationsnetz (ISDN) angeschlossen ist und über mindestens eine Teilnehmeranschlußeinrichtung (SLM) an Endgeräte (TT3, TT4) angeschlossen ist, wobei in der ersten Nebenstellenanlage (PINX1) eine Teamfunktionssteuerung (TC) vorgesehen ist, die bestimmte Endgeräte als über den ersten Vermittlungsknoten (SW1) anrufbare Teamendgeräte eines Teams gemäß einer Teamfunktion steuert und hierbei abhängig vom vermittlungstechnischen Zustand einzelner Teamendgeräte eine Signalisierung zu anderen Teamendgeräten veranlaßt sowie deren vermittlungstechnischen Zustand beeinflußt, **dadurch gekennzeichnet, daß** mindestens ein erstes Teamendgerät (TT1) des Teams unmittelbar über eine Teilnehmeranschlußeinrichtung (SLM) an den ersten Vermittlungsknoten (SW1) als Endgerät angeschlossen ist und mindestens ein zweites Teamendgerät (TT3, TT4) als abgesetzter Teilnehmer des Teams über eine Teilnehmeranschlußeinheit (SLM) an den zweiten Vermittlungsknoten (SW2) angeschlossen ist und über den ersten Vermittlungsknoten (SW1), eine Hotline-Verbindung (HL) zwischen dem ersten und dem zweiten Vermittlungsknoten (SW1, SW2) und den zweiten Vermittlungsknoten (SW2) erreichbar ist, und daß die Teamfunktionssteuerung (TC) für kommende Rufe eine automatische Anrufumleitung zu Team-Ersatzteilnehmerendgeräten (TT2) bewirkt, wenn sie erkennt, daß die Hotline-Verbindung (HL) zur zweiten Nebenstellenanlage (PINX2) und somit zu den abgesetzten Teamendgeräten (TT3, TT4) gestört ist.

2. Kommunikationssystem nach Anspruch 1, **dadurch gekennzeichnet, daß** die Teamfunktionssteuerung (TC) eine Verfügbarkeit der Hotline-Verbindung (HL) zwischen dem ersten und dem zweiten Vermittlungsknoten (SW1, SW2) durch Prüfung der für die transparente Übertragung der Teilnehmer-zu-Teilnehmer-Meldungen für die abgesetzten Teilnehmer erforderlichen Signalisierungsverbindung prüft.

## Claims

1. Communications system comprising at least one first private branch exchange (PINX1) with a switching controller (CC) and at least one first switching node (SW1), which is connected via a first network connection device (TU1) to at least one higher-order communications network (ISDN) and is connected via at least one user access device (SLM) to terminals (TT1, TT2), and comprising at least one second private branch exchange with a switching controller (CC) and at least one second switching node (SW2), which is connected via a second network connection device (TU2) to the higher-order communications network (ISDN) and via at least one user access device (SLM) to terminals (TT3, TT4), whereby a team function controller (TC) is provided in the first private branch exchange (PINX1), which controls specific terminals as team terminals of a team which can be called via the first switching node (SW1) according to a team function and hereby initiates signaling to other team terminals based on the switching status of individual team terminals and influences their switching status, **characterized in that** at least one first team terminal (TT1) of the team is connected directly via a user access device (SLM) to the first switching node (SW1) as a terminal and at least one second team terminal (TT3, TT4) is connected as a remote user of the team via a user access unit (SLM) to the second switching node (SW2) and can be accessed via the first switching node (SW1), a hot line connection (HL) between the first and second switching nodes (SW1, SW2) and the second switching node (SW2), and that the team function controller (TC) automatically diverts incoming calls to standby team user terminals (TT2), if it identifies that the hotline connection (HL) to the second private branch exchange (PINX2) and therefore to the remote team terminals (TT3, TT4) is defective.

2. Communications system according to Claim 1, **characterized in that** the team function controller (TC) verifies the availability of the hotline connection (HL) between the first and second switching nodes (SW1, SW2) by testing the signaling connection required for remote users for the transparent transmission of user to user messages.

## Revendications

1. Système de communication, comprenant au moins une première installation à postes supplémentaires (PINX1) ayant une commande de commutation (CC) et au moins un premier noeud de commutation (SW1), lequel est raccordé, par l'intermédiaire d'un premier dispositif de raccordement au réseau (TU1), à au moins un réseau de communication de niveau supérieur (ISDN) et lequel est raccordé, par l'intermédiaire de au moins un dispositif de raccordement d'abonnés (SLM), à des terminaux (TT1, TT2), et comprenant au moins une deuxième installation à postes supplémentaires ayant une commande de commutation (CC) et au moins un deuxième noeud de commutation (SW2), lequel est raccordé, par l'intermédiaire d'un deuxième dispositif de raccordement au réseau (TU2), au réseau de communication de niveau supérieur (ISDN) et lequel est raccordé, par l'intermédiaire de au moins un dispositif de raccordement d'abonnés (SLM), à des terminaux (TT3, TT4), une commande de fonction de groupe (TC) étant prévue dans la première installation à postes supplémentaires (PINX1), laquelle contrôle, conformément à une fonction de groupe, certains terminaux en tant que terminaux de groupe accessibles par l'intermédiaire du premier noeud de commutation (SW1), laquelle provoque, en fonction de l'état de commutation de certains terminaux de groupe, une signalisation vers d'autres terminaux de groupe et qui influence leur état de commutation, **caractérisé par le fait que** au moins un premier terminal (TT1) du groupe est raccordé directement comme terminal, par l'intermédiaire d'un dispositif de raccordement d'abonné (SLM), au premier noeud de commutation (SW1) et au moins un deuxième terminal (TT3, TT4) est raccordé comme abonné déporté du groupe, par l'intermédiaire d'une unité de raccordement d'abonnés (SLM), au deuxième noeud de commutation (SW2), et est accessible par l'intermédiaire du premier noeud de commutation (SW1), d'une liaison directe (HL) entre le premier et le deuxième noeud de commutation (SW1, SW2) et du deuxième noeud de commutation (SW2) et que la commande de fonction de groupe (TC) provoque, pour des appels en arrivée, un déroutage automatique des appels vers des terminaux de remplacement du groupe (TT2), lorsqu'elle reconnaît que la liaison directe (HL) vers la deuxième installation à postes supplémentaires (PINX2) et, par conséquent, vers les terminaux déportés du groupe (TT3, TT4) est en dérangement.

2. Système de communication selon la revendication 1 **caractérisé par le fait que** la commande de fonction de groupe (TC) vérifie une disponibilité de la liaison directe (HL) entre le premier et le deuxième noeud de commutation (SW1, SW2) en contrôlant la liaison de signalisation nécessaire à la transmission transparente des messages d'abonné à abonné destinés aux abonnés déportés.
